# EUROPÄISCHE PATENTANMELDUNG

(11) **EP 3 808 234 A2**
(43) Veröffentlichungstag der Anmeldung: **21.04.2021**
(21) Anmeldenummer: 20201914.7
(22) Anmeldetag: 15.10.2020
(51) Int. Cl.: A47J 36/06, A47J 36/38

(54) **VENTILIERTER KOCHDECKEL**

(30) Priorität: 15.10.2019 DE 102019127684
(71) Anmelder: Exklusiv-Hauben Gutmann GmbH, 75177 Pforzheim (DE)
(72) Erfinder: Fernandez, Manuel, 75417 Mühlacker (DE)
(74) Vertreter: Patentanwälte und Rechtsanwalt Weiß, Arat & Partner mbB

(57) **Zusammenfassung**

Kochdeckel mit einer Kondensatwanne 4 zum Aufsetzten auf Töpfe, Pfannen und andere erhitzbare Küchengefäße zum Zubereiten von Lebensmitteln, wobei eine Ventilations-Griffeinheit 3 den Kochdeckel 1 an einer Kuppel 2 durchgreift und wobei die Ventilations-Griffeinheit 3 reversibel über einen Verriegelungsschalter 10.1, 10.2 mit der Kuppel 2 verbunden ist.

## Beschreibung

### Technisches Gebiet

Die Erfindung betrifft einen Kochdeckel nach dem Oberbegriff des Anspruchs 1.

### Stand der Technik

Kochdeckel sind bereits in vielfältiger Form und Ausgestaltung bekannt und gebräuchlich. So wird beispielsweise in der DE 298 11 046 U1 ein Topfdeckel des Doppelfunktionsfiltertyps offenbart, welcher Dampföffnungen, Lüftungsschlitze und ein Filterelement aufweist. Weiterhin ist in diesem Zusammenhang auch die DE 76 200 02 U zu nennen. Dort wird ein Deckel zum halbdichten Aufsetzen auf ein Küchengefäß offenbart, welcher über eine Öffnung verfügt der mit einem austauschbaren Filter versehen werden kann.

### Aufgabe der Erfindung

Beim Erhitzen von Nahrungsmitteln entstehen auf unterschiedliche Weise störende Dämpfe und Kochwrasen, die das Arbeiten bzw. Kochen an der Kochstelle in Hinsicht auf Geruch, Temperatur, Sichtbarkeit und Handhabung erschweren.

Die Aufgabe der vorliegenden Erfindung ist es, die Nachteile aus dem Stand der Technik zu überwinden. Insbesondere soll ein Kochdeckel bereitgestellt werden, welcher es erlaubt die Vorteile einer haushaltsüblichen Dunstabzugshaube oberhalb eines Kochfeldes in einer Küche mit einem Kochdeckel für Töpfe, Pfannen oder dergleichen Koch- und Zubereitungsgefäßen zu verbinden und/oder zu kombinieren.

### Lösung der Aufgabe

Zur Lösung der Aufgabe führen die Merkmale nach dem Anspruch 1.

Vorteilhafte Ausgestaltungen sind in den Unteransprüchen beschrieben.

In typischen Ausführungsformen umfasst der erfindungsgemässe Kochdeckel eine Kuppel mit einer Kondensatwanne und einer Ventilations-Griffeinheit.

Die Kuppel weist eine gewölbte und im horizontalen Schnitt runde Ausformung auf. Diese Kuppel besteht vorzugsweise aus einem hitzebeständigen und durchsichtigen Glas oder einem hitzebeständigen und durchsichtigen Kunststoff. Natürlich kann die Kuppel auch aus einem anderen geeigneten Metall oder einer geeigneten Metalllegierung, beispielsweise aus Edelstahl, Aluminium und oder anderen Metallen bestehen.

Die Kuppel umfasst an ihrer unteren Seite, welche diese Seite ist, die den größten Kuppeldurchmesser aufweist und bei sachgemäßer Verwendung des Kochdeckels auf einem Topf oder dergleichen aufliegt, eine umlaufende Kondensatwanne. Diese Kondensatwanne hat insbesondere zwei Funktionen. Zum einen dient die Kondensatwanne zum leichten Aufsetzten auf durchmesserunterschiedliche Töpfe, Pfannen und andere erhitzbare Küchengefäße zum Zubereiten von Lebensmitteln. Dies ermöglich ein breit ausgebildeter Wannenboden.

Die Kondensatwanne umfasst eine Wannenwand, welche in einem Winkel zwischen 30°und 70°, vorzugsweise 45° zu dem Wannenboden in Richtung der Kuppel geneigt ist.

Die Kondensatwanne verfügt an einer Unterseite des Wannenbodens, welche die Seite ist, die von einer Kuppel abgewandt ist, über eine Reihe von umlaufenden Haltelamellen. Der Wannenboden mit den Haltelamellen dient dazu, den erfindungsgemäßen Kochdeckel auf einen Topf, eine Pfanne oder dergleichen sicher und rutschfest aufsetzen zu können. Durch die Ausformung des Wannenbodens ist dabei vorteilhaft gewährleistet, dass eine Kompatibilität bezüglich unterschiedlicher Durchmessergrößen der abzudeckenden Töpfe, Pfannen-, und Küchenbehältnissen besteht, wodurch der erfindungsgemässe Kochdeckel für unterschiedliche Kochgeschirrgrößen verwendet werden kann.

Zum anderen sammelt sich während des Kochvorganges an der Kuppel entstandenes Kondensat in der Kondensatwanne, welches dort aufgefangen wird und nicht zurück auf die Lebensmittel fließen kann.

Zudem schützt die Kondensatwanne die Kuppel vor Beschädigungen. In bevorzugten Ausführungsformen bestehen die Haltelamellen aus einem hitzebeständigen und rutschmindernden Kunststoff, oder sind mit einem entsprechenden Kunststoff beschichtet. Die Haltelamellen können aus dem Wannenboden hervorgehen, oder nachträglich aufgebracht werden. und aus einem anderen Material bestehen als der Wannenboden.

Die Kuppel weist an ihrer Kuppelspitze eine kreisrunde Öffnung auf, an der sie von der Ventilations-Griffeinheit durchgriffen wird.

Die Ventilations-Griffeinheit umfasst vorzugswiese zwei Verriegelungsschalter über welche sie mit der Kuppel reversibel verbunden ist. Die Verriegelungsschalter durchgreifen dazu an einer dafür vorgesehenen Position die Kuppel und verbinden durch einen lösbaren Einrastmechanismus die Ventilations-Griffeinheit mit der Kuppel. Dabei ist diese Verbindung mittels des Einrastmechanismus durch Eindrücken der Verriegelungsschalter wieder lösbar, sodass die Ventilations-Griffeinheit nach Bedarf von der Kuppel getrennt werden kann. Nach der Trennung liegt die kreisrunde Öffnung der Kuppel wieder frei und die die Ventilations-Griffeinheit ist getrennt von der Kuppel.

Die Ventilations-Griffeinheit umfasst neben den Verriegelungsschaltern einen Ventilations- und Filtertunnel, ein Griffelement mit einem Bedienfeld und eine Batteriestandanzeige.

Der Ventilations- und Filtertunnel ist eine röhrenförmige Öffnung in der Ventilations-Griffeinheit. Ist die Ventilations- Griffeinheit ordnungsgemäß mit der Kuppel verbunden, bildet der Ventilations- und Filtertunnel eine röhrenförmige Verbindung von der Aussenseite zur Innenseite des Kochdeckels. Wobei mit Aussenseite die Seite gemeint ist, die nicht von der Kuppel überdeckt wird, also die Seite die ausserhalb der Kuppelabdeckung liegt. Die Innenseite liegt entsprechend unterhalb der Kuppel in der Abdeckung. Die Innenseite ist bei ordnungsgemäßer Verwendung des Kochdeckels zwischen der Kuppel und eine Topf, oder einer Pfanne verortet.

Der Ventilations- und Filtertunnel ist an seiner Tunnelwand mit mehreren Aufnahmeelementen für unterschiedliche Segmente ausgestattet, die dort reversibel aufgenommen werden können. Insbesondere werden in den Ventilations- und Filtertunnel derart ein elektrisch betriebenes Ventilationssegment, ein Geruchsfiltersegment, ein Aktivkohlefiltersegment und ein Fett- und Ölfiltersegment aufgenommen, wobei die Aufzählung von Aussen noch innen gerichtet ist. Zu diesen Segmenten ist an der zur Aussenseite gerichteten Seite ein Außengitter und an der Innenseite ein Innenspritzschutzgitter im Ventilations- und Filtertunnel angeordnet.

Der modulare Aufbau über einzelne Segmente hat den Vorteil, dass jedes Segment einzeln, beispielsweise zu Reinigungszwecken entnommen, oder ausgetauscht werden kann. Dieser Austausch ist nur dann möglich, wenn die Ventilations-Griffeinheit nicht mit der Kuppel verbunden ist.

Die Aufnahmeelemente des Filtertunnels für die o.g. Segmente und die beiden Gitter können in Ihrer Funktionsweise unterschiedlich sein und beispielsweise über ein Gewinde oder über eine Klickverbindung erfolgen.

Über den Ventilations- und Filtertunnel besteht weiterhin ein Zugang zum einem in der Ventilations-Griffeinheit angeordneten Batteriefach und einem Fach mit einer Steuer- und Kommunikationseinheit. Den Zugang zu dem Batteriefach und dem Fach bildet ein Batteriefachdeckel, bzw. Fachdeckel, welche beide in einer Tunnelwand des Ventilations- und Filtertunnel angeordnet sind. Der Batteriefachdeckel sowie der Fachdeckel können über einen Klemmmechanismus geöffnet werden. Beide Deckel sind mit einer isolations- und Dichtungsschicht ausgestattet. Diese Isolations- und Dichtungsschickt verhindert, dass in das Innere des Batteriefachs bzw. Fachs Hitze und/oder Feuchtigkeit eindringen können.

In dem Fach ist die Steuer- und Kommunikationseinheit angeordnet, die über eine Batterie, welche im Batteriefach angeordnet ist, mit Strom versorgt wird.

Der Steuer- und Kommunikationseinheit werden über das Bedienfeld Befehle erteilt, welche sich auf die Steuerung des elektrisch betriebenen Ventilationssegments richten, wobei die Ventilationsintensität sowie die Ventilationsdauer eingestellt werden kann. Weiterhin ist es möglich Befehle drahtlos über ein Smartphone, Tablet oder ein anderes Smart-Gerät an die Steuer- und Kommunikationseinheit zu übermitteln. Zudem ist eine Kopplung der Steuer- und Kommunikationseinheit mit einer entsprechend smart ausgerüsteten Dunstabzugshaube möglich, wobei die Ventilationsintensität sowie die Ventilationsdauer mit der Ventilationstätigkeit der über einem Kochfeld angeordneten Dunstabzugshaube abgestimmt bzw. ergänzt werden kann. Natürlich ist eine Kopplung der Steuer- und Kommunikationseinheit mit einem entsprechend ausgestatteten Herd bzw. Kochfeld möglich, so dass der Kochvorgang mit der Ventilationstätigkeit abgestimmt werden kann, auch ohne das Bedienfeld benutzen zu müssen.

Das Ventilationssegment wird ebenso wie die Steuer- und Kommunikationseinheit über eine Batterie, welche in dem Batteriefach angeordnet ist, mit dem notwendigen Strom versorgt. Die Übertragung des Stroms erfolgt über ein entsprechendes Kabel, wobei Kontakte zur Stromübertragung in dem entsprechenden Aufnahmeelement des Ventilations- und Filtertunnels und einer Aussenwand des Ventilationssegments umfasst sind.

Das Ventilationssegment weist einen Lüftungspropeller auf, welcher durch Rotation die Entsprechende Ventilationsfunktion gewährleistet. Angetrieben wird der Lüftungspropeller durch einen elektrisch betriebenen Antriebsmotor. Dieser Antriebsmotor ist vorzugsweise an einer Propellernabe zwischen den zumindest zwei Lüftungspropellerblättern angeordnet. Es kann auch vorgesehen sein, dass an Stelle eines Lüftungspropellers eine Rotorscheibe mit entsprechend ausgebildeten Lüftungslamellen angeordnet ist. Wesentlich ist nur, dass eine angemessene Ventilationsleistung erfüllt wird. In einigen Ausführungsformen kann der Antriebsmotor auch an einer anderen geeigneten Position angeordnet sein.

Ausgehend von der Innenseite, ist der Ventilations- und Filtertunnel zunächst mit dem Innenspritzschutzgitter abgedeckt. Das Innenspritzschutzgitter ist wie die anderen Segmente über entsprechende Aufnahmeelemente mit dem Ventilations- und Filtertunnel entnehmbar verbunden. Es besteht aus einen relativ dichten Drahtgewebe, welches die Eigenschaft hat, grobe Elemente, wie Teile von Lebensmitteln oder gröbere Fett- und Öl Spritzer von einem Eindringen in dem Ventilations- und Filtertunnel abzuhalten.

An das Innenspritzschutzgitter schließt sich das Fett- und Ölfiltersegment an. Es ist ebenso wie das Innenspritzschutzgitter über entsprechende Aufnahmeelemente mit dem Ventilations- und Filtertunnel entnehmbar verbunden. Das Fett- und Ölfiltersegment entzieht der durch das Ventilationssegment angesaugten Luft mit den dort aufgenommenen Kochwrasen weitgehend alle Fett- und Ölbestandteile, wobei diese in das in das Fett- und Ölfiltersegment aufgenommen aber nicht in Richtung des Aktivkohlefilters weitergegeben werden. Das Fett- und Ölfiltersegment kann nach Bedarf aus dem Ventilations- und Filtertunnel entnommen und wieder eingesetzt werden um es zu reinigen oder auszutauschen. Es ist wesentlich, dass das Fett- und Ölfiltersegment dem Aktivkohlefiltersegment vorgeschaltet wird, damit das Aktivkohlefiltersegment nicht durch Fette und Öle in seiner Tätigkeit herabgesetzt wird.

An das Fett- und Ölfiltersegment schließt sich das Aktivkohlefiltersegment an. Es ist ebenfalls über entsprechende Aufnahmeelemente mit dem Ventilations- und Filtertunnel entnehmbar verbunden und kann auch zu Reinigungs- oder Austauschzwecken entnommen, wieder eingesetzt oder ersetzt werden. Das Aktivkohlefiltersegment hat die Eigenschaft die durchströmende und mit Kochwrasen Luft, welche durch das Fett- und Ölfiltersegment vorgereinigt wurde zu reinigen. Bei der Filterung und Adsorption werden die zu entfernenden Substanzen, insbesondere die die Gerüche verursachen, von der Aktivkohle aufgenommen und in der Kohlenstoffmasse angereichert.

An das Aktivkohlefiltersegment schließt dann noch ein Geruchsfiltersegment an. Das Geruchsfiltersegment ist eine Segment, welches die von dem Fett- und Ölfiltersegment sowie dem Aktivkohlefiltersegment vorgereinigte Kochluft noch einmal reinigt und ggf. auch entfeuchtet, so dass die bei dem Ventilationssegment ankommende Kochluft, dann weitgehend von Kochwrasen und den damit verbundenen Gerüchen befreit wird.

Es kann auch vorgesehen sein, dass auf das Geruchfiltersegment verzichtet wird. Dadurch kann der Ventilations- und Filtertunnel kleiner ausgebildet werden, so dass sich die Große des Griffelements verringert.

Weiterhin ist auch vorgesehen, dass die Reihenfolge der Anordnung der Segmente in dem Ventilations- und Filtertunnel veränderlich ist. So kann beispielsweise das Ventilationssegment auch an der Innenseite des Ventilations- und Filtertunnels angeordnet sein, so dass sich alle anderen Segmente in Richtung der Aussenseite innerhalb des Ventilations- und Filtertunnels daran anschließen.

Zudem ist in einer Ausführungsform vorgesehen, dass der Lüftungspropeller des Ventilationssegments passiv durch die aufsteigende Luft und entstehenden Druck in einem mit dem Kochdeckel abgedeckten Topf, oder einem anderen entsprechenden Kochutensil angetrieben wird, wobei die aufsteigende Luft und der Druck durch die Hitze des Kochvorgangs erzeugt werden. Dadurch ist in dieser Ausführungsform ein Antrieb des Propellers durch einen elektrisch betriebenen Antriebsmotor nicht notwendig.

Das sich an das Geruchsfiltersegment anschließende Ventilationssegment, welche bereits oben genauer beschreiben wurde, erzeugt die Ventilationsleistung, welche für das Ansaugen und Filtern der entstehenden Kochluft mit den Kochwaren beim Kochvorgang benötigt wird.

In Richtung der Aussenseite, also der Seite die von der Kuppel abgewandt ist, ist das Ventilationssegment durch das Außengitter abgedeckt. Das Außengitter ist ebenfalls über Aufnahmeelemente mit dem Ventilations- und Filtertunnel entnehmbar verbunden. Es kann aber auch eine Einheit mit dem Ventilationssegment bilden. Es besteht aus einem groben Drahtgitter, kann aber auch aus einem Kunststoffgitter bestehen. Es hat die Aufgabe das Ventilationssegment zu schützen und zudem zu verhindern, dass versehentlich in das Ventilationssegment gegriffen wird oder Fremdkörper hineingeraten können.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

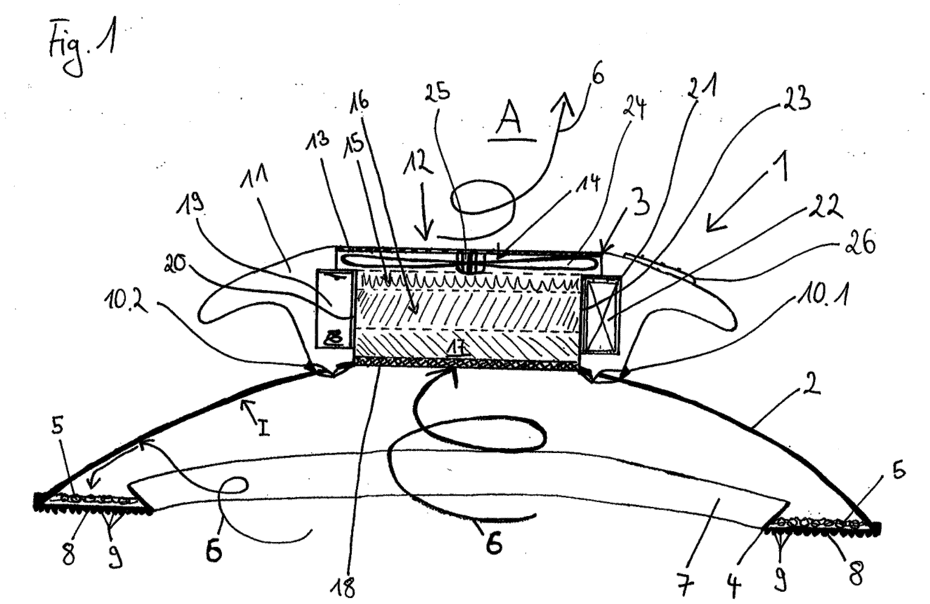

- Figur 1: eine geschnittene Ansicht eines erfindungsgemäßen ventilierten Kochdeckels.

### Ausführungsbeispiel

In Figur 1 ist ein Ausführungsbeispiel eines erfindungsgemäßen ventilierten Kochdeckels in einer horizontal geschnittenen Darstellung abgebildet.

Der erfindungsgemässe Kochdeckel 1 weist eine gewölbte und im horizontalen Schnitt runde und im vertikalen Schnitt gewölbte Kuppel 2 auf. Diese Kuppel 2 besteht aus einem hitzebeständigen und durchsichtigen Glas, einem hitzebeständigen und durchsichtigen Kunststoff, oder aus einem geeigneten Metall oder einer geeigneten Metalllegierung, beispielsweise bestehend aus Edelstahl, Aluminium und oder anderen Metallen.

Die Kuppel 2 ist an ihrer Kuppelspitze von einer Ventilations-Griffeinheit 3 durchbrochen. Weiterhin verfügt die Kuppel 2 an ihrer unteren Seite, welche diese Seite ist, die den größten Kuppeldurchmesser aufweist, über eine umlaufende Kondensatwanne 4.

Die Kondensatwanne 4 dient zum Auffangen von Kondensat 5, welches sich an der Innenseite I der Kuppel 2 absetzt und dann, bei ordnungsgemässem Gebrauch, an dieser hinunter in die Kondensatwanne 4 fließt und dort gesammelt wird. Die Bewegung aufsteigender Luft mit Kochwrasen und Kondensats 5 ist durch Pfeile 6 dargestellt.

Die Kondensatwanne 4 verfügt über eine Wannenwand 7, welche das Auffangen des Kondensats 5 ermöglicht, wobei die Wannenwand 7 in einem Winkel von ca. 45 Grand von einem Wannenboden 8 in Richtung der Kuppel 2 geneigt ist. Der Wannenboden 8 verfügt an seiner Unterseite, welche die Seite ist, die von der Kuppel 2 abgewandt ist, über Haltelamellen 9. Diese Haltelamellen 9 dienen dazu den erfindungsgemäßen Kochdeckel 1 auf einen Topf, eine Pfanne oder dergleichen sicher aufsetzen zu können.

Weiterhin schützt die Kondensatwanne 4 die Kuppel 2 vor Beschädigungen.

Die Ventilations-Griffeinheit 3 durchgreift die Kuppel 2 an ihrer Spitze. Die Spitze der Kuppel ist der Bereich, der den geringsten Durchmesser aufweist und gegenüber der Kondensatwanne 4 liegt.

Die Ventilations-Griffeinheit 3 ist über zwei Verriegelungsschalter 10.1 und 10.2 mit der Kuppel 2 verbunden. Die Verriegelungsschalter 10.1 und 10.2 durchgreifen an einer dafür vorgesehenen Position im Bereich der Öffnung der Kuppel 2, die Kuppel 2 und verbinden dadurch die Ventilations-Griffeinheit 3 mit der Kuppel 2. Dabei ist diese Verbindung durch Eindrücken der Verriegelungsschalter 10.1 und 10.2 wieder lösbar, sodass die Ventilations-Griffeinheit 3 nach Bedarf von der Kuppel 2 getrennt werden kann und die Öffnung dann wieder frei liegt und nicht mehr von der Ventilations-Griffeinheit 3 überdeckt wird.

Die Ventilations-Griffeinheit 3 verfügt über ein umlaufendes Griffelement 11. Dieses Griffelement 11 besteht vorzugsweise aus Kunststoff und ist besonders Hitzebeständig und leitet Wärme nur geringfügig, so dass ein ungeschütztes Anfassen der Ventilations-Griffeinheit 3 an dem Griffelement 11 während eines Kochvorgangs möglich ist.

Weiterhin ist in dem Griffelement 11 eine Bedienfeld 26 umfasst, welches es über eine Steuer- und Kommunikationseinheit 22 erlaubt ein Ventilationssegment 14 zu bedienen.

Die Ventilations-Griffeinheit 3 weist einen Ventilations- und Filtertunnel 12 auf. Dieser Ventilations- und Filtertunnel 12 verbindet die Innenseite I der Kuppel 2 bzw. des Kochdeckels 1 mit einer Aussenseite A. Von der Aussenseite A in Richtung der Innenseite I, weist der Ventilations- und Filtertunnel 12 folgende Bestandteile auf: ein Außengitter 13, das Ventilationssegment 14; einen Geruchsfiltersegment 15, einen Aktivkohlefiltersegment 16, ein Fett- und Ölfiltersegment 17 und ein Innenspritzschutzgitter 18.

Alle vorgenannten Segmente, nämlich das Außengitter 13, das Ventilationssegment 14; das Geruchsfiltersegment 15, das Aktivkohlefiltersegment 16, das Fett- und Ölfiltersegment 17 sowie das Innenspritzschutzgitter 18 sind aus dem Ventilations- und Filtertunnel 12 leicht entnehmbar sobald die Ventilations-Griffeinheit 3 von der Kuppel 2 über die Verriegelungsschalter 10.1 und 10.2 gelöst und getrennt ist. Alle vorgenannten Segmente sind separate handliche Einheiten.

Weiterhin weist der Ventilations- und Filtertunnel 12 ein Batteriefach 19 auf. Dieses Batteriefach 19 ist über den Ventilations- und Filtertunnel 12 und einen Batteriefachdeckel 20 zugänglich. Das Batteriefach 19 greift dabei teilweise in einen Innenbereich des Griffelements 11 ein. Der Batteriefachdeckel 20 ist besonders isoliert und abgedichtet, so dass das Batteriefach 19 gegenüber Hitzeeinwirkung und Feuchtigkeit geschützt ist. In das Batteriefach 19 können eine oder mehrere handelsübliche Batterien oder Akkumulatoren aufgenommen werden.

Ferner ist ein weiteres, ebenfalls über den Ventilations- und Filtertunnel 12 zugängliches, Fach 21 in der Ventilations-Griffeinheit 3 umfasst. Das Fach 21 ist für die Aufnahme von der elektronischen Steuer- und Kommunikationseinheit 22 vorgesehen. Das Fach 21 weist in Richtung des Ventilations- und Filtertunnels 12, wie das Batteriefach 20, einen Fachdeckel 23 auf, welcher ebenfalls abnehmbar ist und auch derart gestaltet bzw. isoliert ist, dass die Steuer- und Kommunikationseinheit 22 gegenüber Hitzeeinwirkung und Feuchtigkeit geschützt ist.

Das Ventilationssegment 14 verfügt über einen Lüftungspropeller 24 und einen Antriebsmotor 25, welcher elektrisch betrieben wird. Das Ventilationssegment 14 ist in Richtung der Aussenseite A durch das Außengitter 13 geschützt. Das Außengitter 13 besteht aus einem metallischen Gittergeflecht, kann jedoch auch aus einem Kunststoff bzw. einer Kunststoffmischung bestehen. Es ist aus seiner Verankerung in dem Ventilations- und Filtertunnel 12 reversibel lösbar.

An das Ventilationssegment 14 schließt sich in Richtung der Innenseite I das Geruchsfiltersegment 15 an. Es besteht aus speziellen Filtern, die insbesondere Gerüche neutralisieren und ausfiltern. Auch das Geruchsfiltersegment 15 ist zu Ersatz- oder Reinigungszwecken austauschbar.

An das Geruchsfiltersegment 15 schließt sich ebenfalls in Richtung der Innenseite I das Aktivkohlefiltersegment 16 an. Es enthält Aktivkohlefilter und ist ebenfalls zu Ersatz- und Reinigungszwecken entnehmbar und wieder einsetzbar.

An das Aktivkohlefiltersegment 16 schließt weiter in Richtung der Innenseite dann das Fett- und Ölfiltersegment 17 an. Es schließt, nur getrennt durch das Innenspritzschutzgitter 18, an die Innenseite I an und nimmt Fette und Öle auf, die durch die Kochwrasen und Dünste, Pfeil 6, in den Ventilations- und Filtertunnel 12 getragen werden. Dabei dienst das Innenspritzschutzgitter 18 dazu gröbere Partikel zurückzuhalten.

Bezugnehmend auf die Figuren 1 erklärt sich die Funktionsweise der erfindungsgemässen Vorrichtung folgendermassen:
Der erfindungsgemässe Kochdeckel 1 wird über die Haltelamellen 9 der Kondensatwanne 4 auf einen Topf, eine Pfanne oder dergleichen sicher und rutschfest aufgesetzt. Dadurch wir gewährleistet, dass während des Kochvorganges an der Kuppel 2 entstandenes Kondensat in der Kondensatwanne 4 aufgefangen wird und nicht zurück auf die Lebensmittel gelangt.

Weiterhin ermöglicht die Kondensatwanne 4 über ihren Wannenboden 8, dass eine Kompatibilität bezüglich unterschiedlicher Durchmessergrößen der abzudeckenden Töpfe, Pfannen-, und Küchenbehältnissen besteht, wodurch der erfindungsgemässe Kochdeckel 1 für unterschiedlich Kochgeschirrgrößen verwendet werden kann.

Nachdem der Kochvorgang gestartet wurde, kann die Ventilationsfunktion über das Bedienfeld 26, welches in dem Griffelement 11 der Ventilations-Griffeinheit 3 angeordnet ist, gestartet und geregelt werden. Mit geregelt ist gemeint, dass unterschiedliche Ventilationsstufen, die sich durch die Intensität und Dauer der Ventilation unterscheiden, ausgewählt werden können. Die Auswahl, die über das Bedienfeld 26 getroffen wird, wird dann über die Steuer- und Kommunikationseinheit 22 weiter an das Ventilationssegment 14 geleitet.

Weiterhin können der Steuer- und Kommunikationseinheit 22 Befehle auch ohne das Bedienfeld 26 zugeführt werden. Die Steuer- und Kommunikationseinheit 22 ist in der Lage drahtlos mit Smart-Geräten wie Smartphones oder Tabletts zu kommunizieren. Zudem besteht auch die Möglichkeit eine Kopplung mit einer entsprechend ausgerüsteten Dunstabzugshaube herzustellen, wodurch eine Kombination von Ventilation des erfindungsgemässen Kochdeckels 1 und einer Dunstabzugshabe ermöglicht wird. Darüber hinaus ist auch eine Kopplung mit einem Herd möglich, bei der die Ventilationsleistung des erfindungsgemässen Kochdeckels 1 mit der Tätigkeit eines Kochfelds abgestimmt werden kann.

Die beim Kochvorgang aufsteigenden und störenden Kochwrasen und Kochkondensate der aufsteigenden Kochluft werden nach Aktivierung des Ventilationssegments 14 in den Ventilations- und Filtertunnel 12 der Ventilations-Griffeinheit 3 gesogen, welche über eine Öffnung mit dem Inneren der Kuppel 2 verbunden ist. In dem Ventilations- und Filtertunnel 12 werden die derart aufgesaugten Kochwrasen und das Kochkondensat der Luft durch das Innenspritzschutzgitter 18, das Fett- und Ölfiltersegment 17, Aktivkohlefiltersegment 16 und das Geruchsfiltersegment 15 gereinigt und von lästigen Gerüchen befreit und dann über das Ventilationssegments 14 und das Außengitter 13 nach Aussen abgegeben. Je nach Bedarf kann die Ventilationsintensität des Ventilationssegments 14 bestimmt, also herauf- oder herabgesetzt werden.

Nach einem oder mehreren Kochvorgängen kann es dann notwendig sein, die einzelnen Segmente sowie die Gitter zu reinigen oder auszutauschen. Dazu wird die Ventilations-Griffeinheit 3 über die Bedienung der Verriegelungsschalter 10.1, 10.2 von der Kuppel 2 getrennt. Dadurch wird der Zugriff auf die einzelnen Segmente in dem Ventilations- und Filtertunnel 12 ermöglicht, welche nacheinander entnommen und nach einer Reinigung oder einem Austausch wieder in den Ventilations- und Filtertunnel 12 eingesetzt werden können.

Sind alle Segmente entnommen worden ist auch der Zugriff auf das Batteriefach 19 mit dem Batteriefachdeckel 20 möglich, so dass bei Bedarf die dort angeordnete Batterie ausgetauscht werden kann. Ob die Batterie ausgetauscht werden muss, kann einfach von der Batteriestandanzeige abgelesen werden, welche auf dem Griffelement 11 angeordnet ist.

Ebenso zugänglich wie das Batteriefach ist auch das Fach 21 mit der Steuer- und Kommunikationseinheit 22, welches durch den Fachdeckel 23 abgeschirmt ist. Hier kann nach Bedarf auf die Steuer- und Kommunikationseinheit 22 zugegriffen werden. Beide Deckel 20 und 23 sind über einen üblichen Klemmmechanismus zu öffnen und wieder zu verschließen.

Obwohl nur ein bevorzugtes Ausführungsbeispiel der Erfindung beschrieben und dargestellt wurde, ist es offensichtlich, dass der Fachmann zahlreiche Modifikationen hinzufügen kann, ohne Wesen und Umfang der Erfindung zu verlassen. Insbesondere kann die Reihenfolge und Anzahl der Segmente verändert werden. Diese können beispielsweise zu einem einzigen oder auch zwei Segemet(en) zusammengefasst werden. Weiterhin können sich die Ausformungen der Ventilations-Griffeinheit 3 insbesondere die des Griffelements 11 unterscheiden. Weiterhin ist auch vorgesehen, dass das Ventilationssegment 14 den anderen Segmenten vorgeschaltet ist, also von der Innenseite I den Ventilations- und Filtertunnel 12 abdeckt und sich die anderen Filtersegmente in Richtung Aussenseite A daran anschließen.

### Bezugszeichenliste

| | |
|---|---|
| 1 | Kochdeckel |
| 2 | Kuppel |
| 3 | Ventilations-Griffeinheit |
| 4 | Kondensatwanne |
| 5 | Kondensat |
| 6 | Pfeile |
| 7 | Wannenwand |
| 8 | Wannen boden |
| 9 | Haltelamellen |
| 10.1,10.2 | Verriegelungsschalte |
| 11 | Griffelement |
| 12 | Ventilations- und Filtertunnel |
| 13 | Außengitter |
| 14 | Ventilationssepment |
| 15 | Geruchsfiltersegment |
| 16 | Aktivkohlefiltersepment |
| 17 | Fett- und Ölfiltersegment |
| 18 | Innenspritzschutzpitter |
| 19 | Batteriefach |
| 20 | Batteriefachdeckel |
| 21 | Fach |
| 22 | Steuer- und Kommunikationseinheit |
| 23 | Fachdeckel |
| 24 | Lüftungspropeller |
| 25 | Antriebsmotor |
| 26 | Bedienfeld |
| 27 | |
| 28 | |
| 29 | |
| 30 | |
| A | Aussenseite |
| I | Innenseite |

## Patentansprüche

1. Kochdeckel (1) mit einer Kondensatwanne (4) zum Aufsetzten auf Töpfe, Pfannen und andere erhitzbare Küchengefäße zum Zubereiten von Lebensmitteln,
**dadurch gekennzeichnet,**
**dass** eine Ventilations-Griffeinheit (3) den Kochdeckel (1) an einer Kuppel (2) durchgreift, wobei die Ventilations-Griffeinheit (3) reversibel über einen Verriegelungsschalter (10.1, 10.2) mit der Kuppel (2) verbunden ist.

2. Kochdeckel (1) nach Anspruch 1 **dadurch gekennzeichnet, dass** die Ventilations-Griffeinheit (3) einen Ventilations- und Filtertunnel (12), ein Griffelement (11) mit einem Bedienfeld (26) und eine Batteriestandanzeige und die Verriegelungsschalter (10.1, 10.2) umfasst.

3. Ventilations-Griffeinheit (3) nach Anspruch 1 und 2, **dadurch gekennzeichnet, dass** in dem Ventilations- und Filtertunnel (12), ein elektrisch betriebenes Ventilationssegment (14), ein Geruchsfiltersegment (15), ein Aktivkohlefiltersegment (16) und ein Fett- und Ölfiltersegment (17) austauschbar umfasst sind.

4. Ventilations-Griffeinheit (3) nach Anspruch 3, **dadurch gekennzeichnet, dass** der Ventilations- und Filtertunnel (12) in Richtung einer Aussenseite (A) ein Außengitter (13) und an einer Innenseite (I) ein Innenspritzschutzgitter (18) umfasst.

5. Ventilations-Griffeinheit (3) nach Anspruch 3, **dadurch gekennzeichnet, dass** ein Batteriefach (19) mit einem isolierten Batteriefachdeckel (20) und ein Fach (21) mit einer Steuer- und Kommunikationseinheit (22) und einem isolierten Fachdeckel (23) umfasst sind.

6. Ventilations-Griffeinheit (3) nach Anspruch 3 und 5, **dadurch gekennzeichnet, dass** die Steuer- und Kommunikationseinheit (22) über das Bedienfeld (26) Befehle erhält und/oder Befehle drahtlos über ein Smartphone, Tablet oder ein anderes Smart-Gerät empfangen werden, und wobei die Steuer- und Kommunikationseinheit (22) mit einer entsprechend smart ausgerüsteten Dunstabzugshaube und/oder einem entsprechend ausgestatteten Herd und essen Kochfeld zu koppeln ist.

7. Kochdeckel (1) nach Anspruch 1 **dadurch gekennzeichnet, dass** die Kondensatwanne (4) eine Wannenwand (7) und einen Wannenboden (8) umfasst, wobei die Wannenwand (7) in einem Winkel zwischen 30°und 70° zu dem Wannenboden (8) in Richtung der Kuppel (2) geneigt ist.

8. Kochdeckel (1) nach einem der vorherigen Ansprüche **dadurch gekennzeichnet, dass** an dem Wannenboden (8) Haltelamellen (9) angeordnet sind.

9. Ventilationssegment (14) nach Anspruch 3, **dadurch gekennzeichnet, dass** ein Lüftungspropeller (24) und einen Antriebsmotor (25) umfasst sind.

10. Kochdeckel (1) nach einem der vorherigen Ansprüche **dadurch gekennzeichnet, dass** das Außengitter (13), das Ventilationssegment (14), das Geruchsfiltersegment (15), das Aktivkohlefiltersegment (16) das Fett- und Ölfiltersegment (17) und das Innenspritzschutzgitter (18) über entsprechende Aufnahmeelemente mit dem Ventilations- und Filtertunnel (12) der Ventilations-Griffeinheit (3) entnehmbar verbunden sind und zu Reinigungs- und/oder Austauschzwecken entnehmbar sind und wieder und wieder einsetzbar sind.
